# EUROPEAN PATENT SPECIFICATION

(11) **EP 2 355 458 B1**
(45) Date of publication and mention of the grant of the patent: **08.01.2014**
(21) Application number: 10152871.9
(22) Date of filing: 08.02.2010
(51) Int. Cl.: H04M 1/02

(54) **Electronic mobile device having interchangeable covers**
Mobile elektronische Vorrichtung mit austauschbarer Abdeckung
Dispositif mobile électronique doté de couvercles interchangeables

(43) Date of publication of application: 10.08.2011
(73) Proprietor: BlackBerry Limited, Waterloo, ON N2K 0A7 (CA)
(72) Inventor: Griffin, Jason Tyler, Waterloo Ontario N2L 3W8 (CA); Godycki, Przemyslaw, Brooklyn, New York 11217 (US); Fort, Tucker H, Brooklyn, New York 11231 (US)
(74) Representative: Fennell, Gareth Charles

(56) References cited:
- EP-A1- 2 053 836
- EP-A2- 1 301 011
- US-A- 5 841 630

## Description

### BACKGROUND OF THE DISCLOSURE

This disclosure relates to electronic mobile devices. In particular, this disclosure relates to back covers for electronic mobile devices.

Many types of electronic mobile devices such as cellular phones, personal digital assistants (PDAs), digital media players and the like, support external cases or "skins" that provide additional protection, personalization, or both. These external cases may be rigid or flexible and may comprise various materials, such as nylon, polyester, polycarbonate, silicon, or the like. Regardless of their specific materials, external cases essentially increase the size and weight of electronic mobile devices.

Furthermore, external cases, due to their walls being disposed outwardly from mobile devices, typically interfere when attempting to connect electronic mobile devices to support docks of other electronic accessories such as charging stations, compact audio devices, and the like. As such, external cases typically need to be removed from electronic mobile devices in order to connect the devices to electronic accessories.

EP 1 301 011 A2 describes a user changeable electronic device/mobile phone cover.

EP 2 053 836 A1 describes a folding mobile phone comprising replaceable casings.

US 5841630 describes a mobile device in the form of a laptop computer. The device includes a base and multiple covers at the rear side to prevent access to recesses in the device at the location of the covers.

### BRIEF DESCRIPTION OF THE DRAWINGS

The disclosure will hereafter be described with reference to the accompanying drawings, wherein like reference numerals denote like elements, and:

Fig. 1 is a front perspective view of an electronic mobile device including two removable covers;

Fig. 2 is a front view of the electronic mobile device of Fig. 1;

Fig. 3 is a front view of a base of the electronic mobile device of Fig. 1 separated from the removable covers;

Fig. 4 is a rear perspective view of the electronic mobile device of Fig. 1;

Fig. 5 is a rear view of the electronic mobile device of Fig. 1;

Fig. 6 is a rear view of the base of the electronic mobile device of Fig. 1 separated from the removable covers;

Fig. 7 is a side view of the electronic mobile device of Fig. 1 showing storage compartments;

Fig. 8 is a top view of the electronic mobile device of Fig. 1 showing the storage compartments;

Fig. 9 is another side view of the electronic mobile device of Fig. 1 showing a track and projection riding in the track for guiding the removable covers relative to the base;

Fig. 10 is a front perspective view of the removable covers being removed from the base of the electronic mobile device of Fig. 1;

Fig. 11 is a front perspective view of the removable covers of the electronic mobile device of Fig. 1 separated from the base;

Fig. 12 is a front perspective view of a second embodiment of an electronic mobile device including two removable covers; and

Fig. 13 is a back perspective view of a third embodiment of an electronic mobile device including two removable covers.

### DETAILED DESCRIPTION OF THE DRAWINGS

An electronic mobile device comprises a base including a front surface, a rear surface defining a first compartment, a first side surface extending between the front surface and the rear surface, and a second side surface extending between the front surface and the rear surface. The device further comprises a first cover detachably supported by the base and preventing access to the first compartment. The first cover covers at least a portion of the rear surface, the first side surface, and the second side surface of the base. The device further comprises a second cover detachably supported by the base. The second cover covers at least a portion of the rear surface, the first side surface, and the second side surface of the base.

The first cover may cover substantially 50 percent of the rear surface of the base, and the second cover may cover substantially 50 percent of the rear surface of the base.

The first cover may cover substantially 50 percent of the first side surface and substantially 50 percent of the second side surface, and the second cover may cover substantially 50 percent of the first side surface and substantially 50 percent of the second side surface.

The first cover may extend past the front surface of the base and terminate at front lips that cover a portion of the front surface of the base. The second cover may extend past the front surface of the base and terminate at front lips that cover a portion of the front surface of the base.

The rear surface may further define a second compartment, and the second cover may prevent access to the second compartment.

The first compartment may house a battery.

The base may include a connection interface extending between the first and second side surfaces of the base and separating the first cover and the second cover. The connection interface may include at least one electrical contact.

The base may include a first end surface and second end surface each extending between the front surface and the rear surface. The connection interface may be disposed substantially mid-way between the first end surface and the second end surface.

The first cover may be slidable in a first direction to detach from the base. The second cover may be slidable in a second direction to detach from the base, and the second direction is opposite the first direction.

An electronic mobile device includes a base having a front surface and a rear surface. The front surface has an input panel, and the rear surface defines a first compartment and a second compartment. A first cover is detachably supported by the base and prevents access to the first compartment. A second cover is detachably supported by the base and prevents access to the second compartment.

At least one of the first compartment and the second compartment may house a battery.

The base may further include a first side surface and a second side surface each extending between the front surface and the rear surface. The first cover may include a rear panel preventing access to the first compartment, a first side wall extending from the rear panel and disposed adjacent the first side surface, and a second side wall extending from the rear panel and disposed adjacent the second side surface.

The first and second side walls may extend and terminate past the front surface of the base.

The second cover may include a rear panel preventing access to the second compartment, a first side wall extending from the rear panel and disposed adjacent the first side surface, and a second side wall extending from the rear panel and disposed adjacent the second side surface.

The base may include a connection interface extending along a width of the rear surface and separating the first cover and the second cover.

An electronic mobile device includes a base having a front surface and a rear surface. The front surface has an input panel, and the rear surface supports a connection interface. A first cover is detachably supported by the base on a first side of the connection interface, and a second cover is detachably supported by the base on a second side of the connection interface.

The connection interface may extend between the first cover and the second cover such that the connection interface is accessible between the first cover and the second cover.

The connection interface may include a camera lens.

The base may include a first side surface and a second side surface each extending between the front surface and the rear surface. The connection interface may extend outwardly from the first side surface and the second side surface.

The first cover and the second cover may slidably detach from the base.

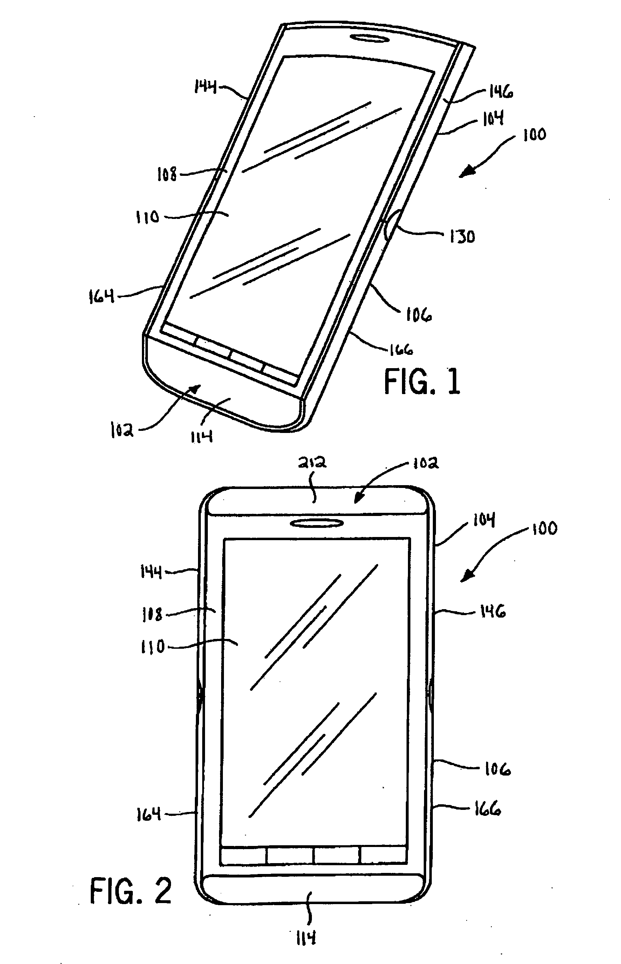

Referring now to the drawings wherein like reference numerals correspond to similar elements throughout the several views, the present disclosure will be described in the context of an electronic mobile device 100 such as a cellular phone, although the present disclosure is also applicable to other devices such as PDAs, notebook computers, digital media players, mobile reading devices, digital cameras, global positioning system (GPS) devices, portable video game systems, and the like. Referring to Figs. 1-11, the electronic mobile device 100 includes a base 102 that detachably supports a first compartment cover 104 and a second compartment cover 106. The covers 104 and 106 may be interchanged with other covers formed of different materials having different sizes, colors, decorative patterns, or the like for personalization of the device 100. Furthermore, the covers 104 and 106 provide a protective case when connected to the base 102, and to this end, some of the surfaces of the base 102 are recessed or otherwise configured to accommodate the covers 104 and 106. These aspects of the device 100 are described in further detail below.

Referring first to the base 102, a front surface 108 supports an input panel 110, such as a touch-sensitive panel, a keypad, a trackball or optical track pad, combinations thereof, or the like. In some embodiments, a first end surface 212 and a second end surface 114 of the base 102 also include additional keys (not shown), such as convenience keys, volume keys, mute keys, or the like. The input panel 110 and the keys may be manipulated to perform various functions such as placing phone calls, browsing the internet, taking photographs, playing electronic games, inputting information to a navigation system, and the like.

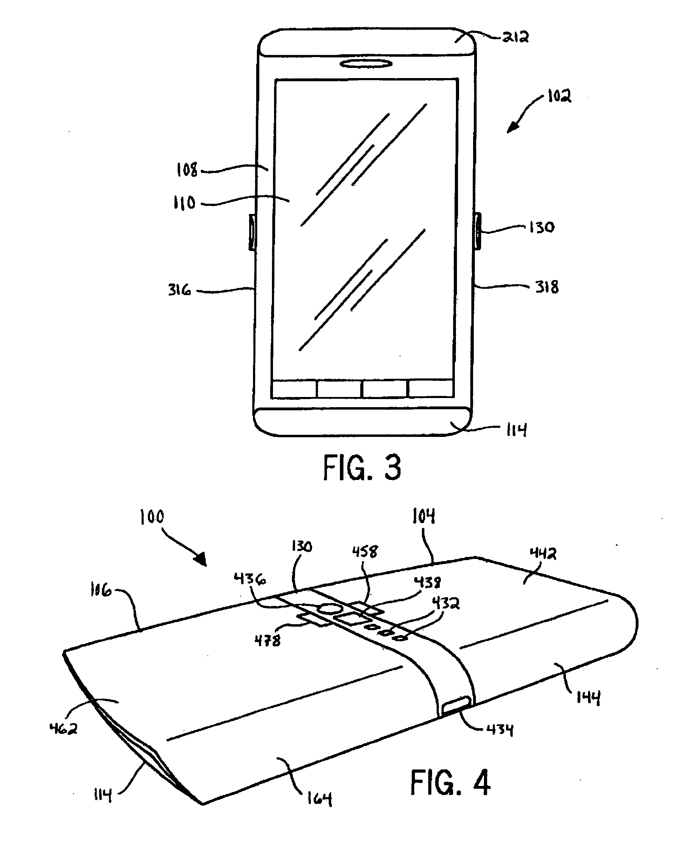

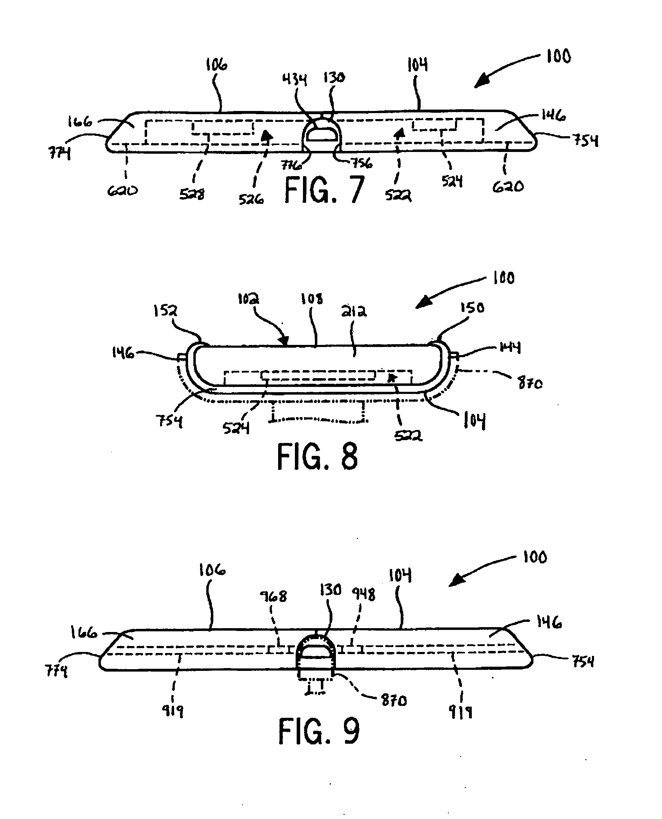

The base 102 also includes a first side surface 316 and a second side surface 318 (Fig. 3) that both extend between the first and second end surfaces 212 and 114. The first and second side surfaces 316 and 318 are normally covered by and disposed adjacent the first and second compartment covers 104 and 106 when the covers 104 and 106 are attached to the base. As such, in some embodiments, the side surfaces 316 and 318 include linear tracks 919 (Fig. 9) that guide the covers 104 and 106 during removal and attachment, which will be described in further detail below.

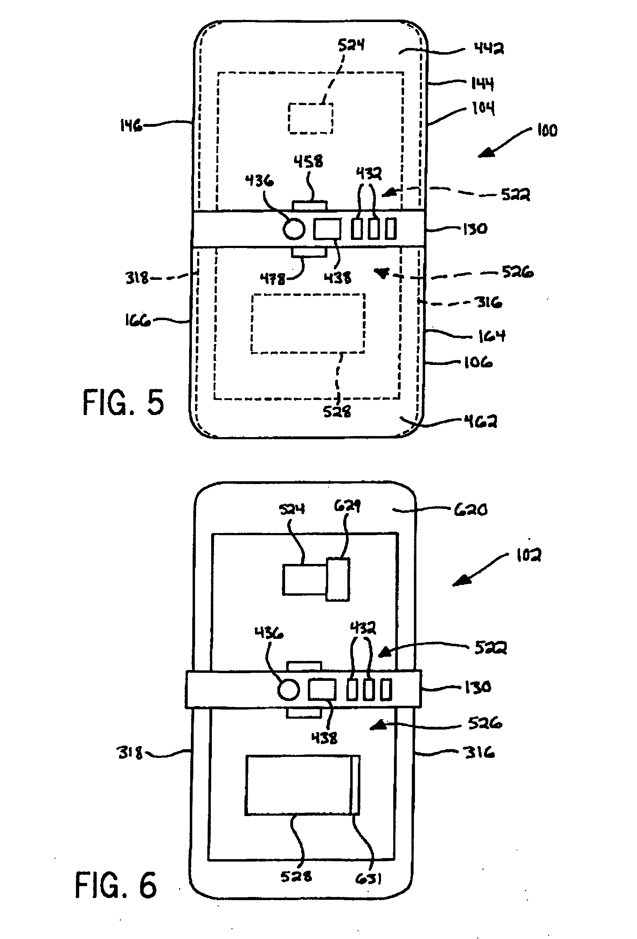

As shown most clearly in Fig. 6, the base 102 further includes a rear surface 620 opposite the front surface 108 (Fig. 3). Like the first and second side surfaces 316 and 318, at least a portion of the rear surface 620 is normally covered by the first and second compartment covers 104 and 106 when the covers 104 and 106 are attached to the base. The covers 104 and 106 also normally prevent access to storage compartments defined by the rear surface 620. That is, the first cover 104 normally prevents access to a first compartment 522 that houses a first removable component 524, such as removable memory card. Similarly, the second cover 106 normally prevents access to a second compartment 526 that houses a second removable component 528, such as a battery. Either or both of the compartments 522 and 526 may house additional removable components (not shown), such as a SIM card and/or an additional memory card.

As used herein, the phrase "prevents access" and variations thereof means that a cover prevents components from being removed from a compartment when the cover is connected to the base 102 (i.e., the cover is in its normal position), but components may be removed from a compartment when the cover is detached from the base 102. That is, no other panels or doors are disposed between the cover and the compartment, and components within the compartment may be manipulated by detaching only the cover. However, the compartment may include connectors or holders, such as the holders 629 and 631 (Fig. 6), that directly support the components therein.

Referring to Figs. 1-11, the rear surface 620 and the side surfaces 316 and 318 support a connection interface 130 that includes one or more electrical contacts or one or more connectors that house electrical contacts, such as battery charging contacts 432 and a data port 434, to facilitate functions such as charging the mobile device 100, exchanging information with the device 100, and the like. In some embodiments, the connection interface 130 further includes a camera lens 436 and a flash 438 to facilitate taking photographs using the device 100.

The connection interface 130 has a narrow saddle-like shape that extends across the width of the rear surface 620, from the first side surface 316 to the second side surface 318, and separates the first and second covers 104 and 106. Such a connection interface 130 facilitates connecting the device 100 to other electronic accessories (not shown), such as charging stations, compact audio devices, or the like, having support docks such as support dock 870 shown in Figs. 8 and 9. In some embodiments, the support dock 870 includes electrical contacts (not shown) that engage the electrical contacts 432 and 434 of the mobile device 100, for example, to charge the battery 528, to permit data transmission between the devices, or the like.

In addition to electrical contacts, the illustrated support dock 870 advantageously has a narrow saddle-like shape corresponding to the connection interface 130 and configured for receiving the device 100. The narrow saddle-like shape permits the support dock 870 to only contact the connection interface 130 to support the device 100. That is, the support dock 870 does not contact the first and second covers 104 and 106 and therefore the device 100 may be connected to the support dock 870 without removing the first and second covers 104 and 106. In addition, other interchangeable covers having different sizes and thicknesses may be connected to the device 100 and used with the support dock 870 provided that the covers do not overlap the connection interface 130 (i.e., the covers define an opening through which the connection interface 130 extends and is accessible).

Furthermore, the saddle-like shapes of the connection interface 130 (i.e., the connection interface 130 extending across the width of the rear surface 620 from the first side surface 316 to the second side surface 318) and the support dock 870 provide lateral support (i.e., support in a direction between the sides of the connection interface 130) for the mobile device 100. As such, the shapes of the support dock 870 and the mobile device 100 prevent the mobile device 100 from falling sideways out of the support dock 870. In addition to the saddle-like shape, in some embodiments, the connection interface 130 is disposed substantially mid-way between the first and second end surfaces 212 and 114 of the base 102 to permit the support dock 870 to easily balance the device 100.

Referring again to Figs. 1-11, the first removable cover 104 includes one or a combination of various materials such as plastic, metal, fabrics, wood, elastomeric materials, or the like. Each material may further include various thicknesses, colors, decorative markings, or the like. The first cover 104 may be detached from the base 102 and then interchanged with other covers having different materials, sizes, colors, decorative markings, or the like to facilitate device personalization.

As briefly described above, the first cover 104 is normally disposed on a first side of the connection interface 130 to prevent access to the first compartment 522. In addition, the first cover 104 also acts as a protective case or skin for the base 102. As such, the electronic mobile device 100 has a smaller size than a similar device that includes both a compartment cover and a separate external protective case.

As shown in the figures, the first cover 104 includes a trough-like shape to act as a protective case for several of the surfaces of the base 102. More specifically, the first cover 104 includes a rear panel 442 (Fig. 4) that normally prevents access to the first compartment 522 and protects at least a portion of the rear surface 620 of the base 102. In some embodiments, the rear panel 442 covers substantially 50 percent of the rear surface 620 of the base 102 (as used herein, substantially meaning +0 percent and -10 percent). The first cover 104 also includes first and second side walls 144 and 146 that extend from the rear panel 442 that are normally disposed adjacent and protect portions of the first and second base side surfaces 316 and 318, respectively. In some embodiments, the first and second side walls 144 and 146 cover substantially 50 percent of the first and second base side surfaces 316 and 318, respectively.

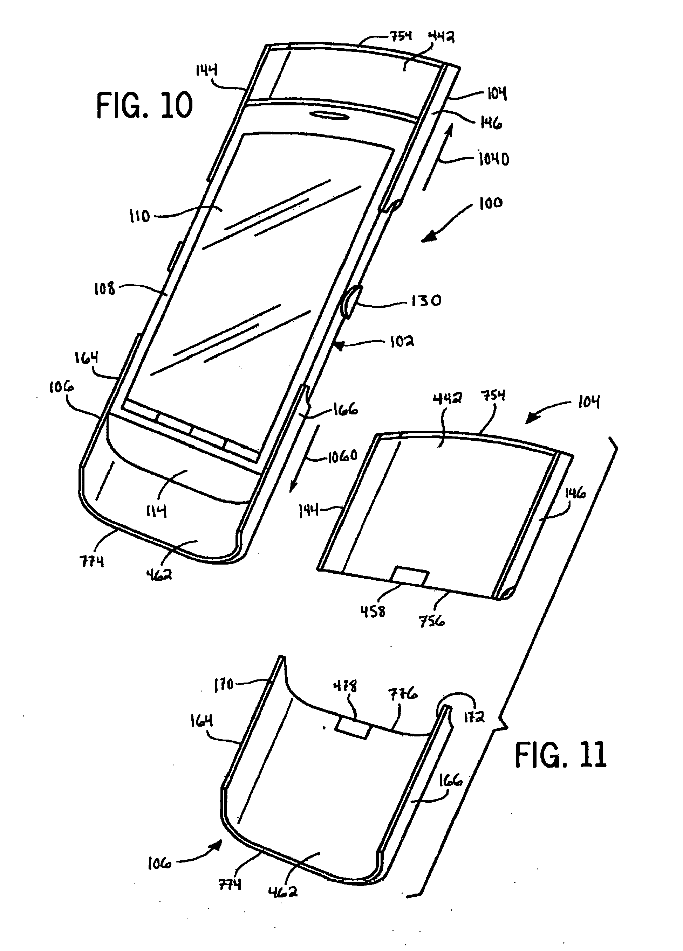

In some embodiments, the first and second side walls 144 and 146 each include projections 948 (Fig. 9) that ride in the linear tracks 919 of the base 102. As such, the projections 948 and the linear tracks 919 permit the first cover 104 to detach from the base 102 by sliding in a first direction 1040 (Fig. 10). As shown most clearly in Fig. 8, the first and second side walls 144 and 146 terminate at front lips 150 and 152, respectively, which extend past and engage the outer perimeter of the front surface 108 of the base 102. In some embodiments, the front lips 150 and 152 of the side walls 144 and 146 extend past and cover a portion of the base front surface 108 (*e.g*., the edge between the front surface 108 and the first and second base side surfaces 316 and 318). The lips 150 and 152 may also engage and hold a transparent protective film (not shown) over the input panel 110, for example, if the input panel 110 is a touch-sensitive panel.

As shown most clearly in Fig. 11, the first and second side walls 144 and 146 and the rear panel 442 define an outer end surface 754 and an inner end surface 756. The outer end surface 754 is shaped to provide, in part, the trough-like shape of the first cover 104, and as such, the outer end surface 754 does not overlap the first end surface 212 of the base 102 after attachment. Similarly, the inner end surface 756 is shaped to provide, in part, the trough-like shape of the first cover 104, and as briefly described above, the inner end surface 756 does not overlap the connection interface 130.

In addition to the above walls and surfaces, in some embodiments, the rear panel 442 of the first cover 104 includes a release latch 458 to secure the first cover 104 to the base 102 in the normal attached position. However, the first cover 104 may be secured to the base 102 in other manners, such as friction engagement and the like.

Still referring to Figs. 1-11, the second cover 106 is generally similar, and in some embodiments identical, to the first cover 104. That is, the second removable cover 106 includes one or a combination of various materials such as plastic, metal, fabrics, wood, elastomeric materials, or the like. Each material may further include various thicknesses, colors, decorative markings, or the like. The second cover 106 may be detached from the base 102 and then interchanged with other covers having different materials, sizes, colors, decorative markings, or the like to permit device personalization.

As briefly described above, the second cover 106 is normally disposed on a second side of the connection interface 130 to prevent access to the second compartment 526. In addition, the second cover 106 also acts as a protective case or skin for the base 102. As such, the electronic mobile device 100 has a smaller size than a similar device that includes both a compartment cover and a separate external protective case.

As shown in the figures, the second cover 106 includes a trough-like shape to act as a protective case for several of the surfaces of the base 102. More specifically, the second cover 106 includes a rear panel 462 (Fig. 4) that normally prevents access to the second compartment 526 and protects at least a portion of the rear surface 620 of the base 102. In some embodiments, the rear panel 462 covers substantially 50 percent of the rear surface 620 of the base 102. The second cover 106 also includes first and second side walls 164 and 166 that extend from the rear panel 462 of the second cover 106 that are normally disposed adjacent and protect portions of the first and second base side surfaces 316 and 318, respectively. In some embodiments, the first and second side walls 164 and 166 cover substantially 50 percent of the first and second base side surfaces 316 and 318, respectively.

In some embodiments, the first and second side walls 164 and 166 each include projections 968 (Fig. 9) that ride in the linear tracks 919 of the base 102. As such, the projections 968 and the linear tracks 919 permit the second cover 106 to detach from the base 102 by sliding in a second direction 1060 (Fig. 10) opposite the first direction 1040. As shown most clearly in Fig. 11, the first and second side walls 164 and 166 terminate at front lips 170 and 172, respectively, that extend past and cover a portion of the base front surface 108 (*e.g*., the edge between the front surface 108 and the first and second base side surfaces 316 and 318). The lips 170 and 172 may also engage and hold a transparent protective film (not shown) over the input panel 110 as described above.

As shown most clearly in Fig. 11, the first and second side walls 164 and 166 and the rear panel 462 define an outer end surface 774 and an inner end surface 776. The outer end surface 774 is shaped to provide, in part, the trough-like shape of the second cover 106, and as such, the outer end surface 774 does not overlap the second end surface 114 of the base 102 after attachment. Similarly, the inner end surface 776 is shaped to provide, in part, the trough-like shape of the second cover 106, and as briefly described above, the inner end surface 776 does not overlap the connection interface 130.

In addition to the above walls and surfaces, in some embodiments, the rear panel 462 of the second cover 106 includes a release latch 478 to secure the second cover 106 to the base 102 in the normal attached position. However, the second cover 106 may be secured to the base 102 in other manners, such as friction engagement and the like.

The structure of the mobile device 100 may vary from the above description without departing from the scope of the invention. For example, in some embodiments, the connection interface 130 and the support dock 870 have shapes other than narrow saddle-like shapes described above. However, the connection interface 130 and the support dock 870 advantageously have generally similar shapes such that the support dock 870 does not contact the covers 104 and 106, and therefore, the device 100 may be used with the aforementioned electronic accessories without detaching the covers 104 and 106.

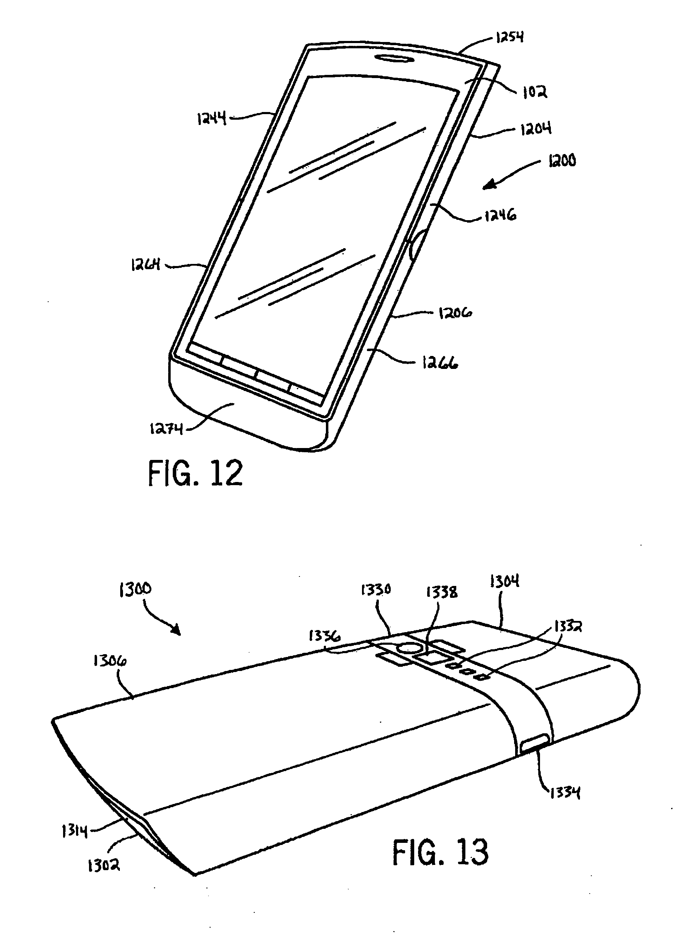

As another example and referring now to Fig. 12, a second embodiment of the electronic mobile device 1200 provides additional protection for the base 102 by covering the first and second end surfaces 212 and 114. The base 102 is as described above, and the device 1200 also includes a first cover 1204 that normally prevents access to the first compartment 522 of the base 102. The first cover 1204 includes first and second side walls 1244 and 1246 that normally overlap and protect portions of the first and second side surfaces 316 and 318 of the base 102. The first cover 1204 further includes an outer end surface 1254 normally disposed adjacent and protecting the first end surface 212 of the base 102. Similarly, a second cover 1206 of the device 1200 includes first and second side walls 1264 and 1266 that normally overlap and protect other portions of the first and second side surfaces 316 and 318 of the base 102. The second cover 1206 further includes an outer end surface 1274 normally disposed adjacent and protecting the second end surface 114 of the base 102.

As yet another example and referring now to Fig. 13, a third embodiment of the electronic mobile device 1300 provides camera components (*e.g*., a camera lens and a flash) in a more traditional position near one of the end surfaces of the device 1300. That is, the device 1300 includes a base 1302 having a connection interface 1330. The connection interface 1330 has a general saddle-like shape and includes electrical contacts 1332 and 1334, a camera lens 1336, and a flash 1338 as described above. However, the connection interface 1330 is offset from the middle of the device 1300 (i.e., disposed closer to a first end surface (not shown) than a second end surface 1314 of the base 1302). Furthermore, the first and second removable covers 1304 and 1306 have different sizes to accommodate the different distances between the connection interface 1330 and the end surfaces of the base 1302.

From the above description, it should be apparent that the present disclosure provides an electronic mobile device having interchangeable covers that permit personalization and customization of the device. Furthermore, the interchangeable covers act as both compartment covers and a protective case for the device, thereby providing a smaller size than a similar device that includes both a compartment cover and a separate external protective case. Further still, the present disclosure also provides an electronic mobile device that may be used with other electronic accessories (*e.g.,* charging stations, compact audio devices) without detaching the interchangeable covers from the device.

It should be appreciated that various other modifications and variations to the preferred embodiments can be made. Therefore, the disclosure should not be limited to the described embodiments. To ascertain the full scope of the disclosure, the following claims should be referenced.

## Claims

1. An electronic mobile device (100), comprising:
a base (102) having a front surface (108) and a rear surface (620), the front surface having an input panel (110), and the rear surface defining a first recess (522) and a second recess (526);
a first cover (104) detachably supported by the base (102) and preventing access to the first recess; and
a second cover (106) detachably supported by the base (102) and preventing access to the second recess;
wherein the base includes a connection interface (130) extending along a width of the rear surface and separating the first cover and the second cover.

2. The electronic mobile device of claim 1, wherein the first cover (104) covers substantially 50 percent of the rear surface of the base, and the second cover (106) covers substantially 50 percent of the rear surface of the base.

3. The electronic mobile device of claim 1, wherein at least one of the first recess (522) and the second recess (526) houses a battery.

4. The electronic mobile device of claim 1, wherein the base further includes a first side surface (316) and a second side surface (318) each extending between the front surface and the rear surface, and wherein the first cover (104) includes a rear panel preventing access to the first recess, a first side wall extending from the rear panel and disposed adjacent the first side surface, and a second side wall extending from the rear panel and disposed adjacent the second side surface.

5. The electronic mobile device of claim 4, wherein the first cover (104) covers substantially 50 percent of the first side surface and substantially 50 percent of the second side surface, and the second cover (106) covers substantially 50 percent of the first side surface and substantially 50 percent of the second side surface.

6. The electronic mobile device of claim 4, wherein the first and second side walls extend and terminate past the front surface of the base (102).

7. The electronic mobile device of claim 4, wherein the second cover (106) includes a rear panel preventing access to the second recess, a first side wall extending from the rear panel and disposed adjacent the first side surface, and a second side wall extending from the rear panel and disposed adjacent the second side surface.

8. The electronic mobile device of claim 1, wherein the connection interface (130) includes at least one electrical contact.

9. The electronic mobile device of claim 1, wherein the connection interface (130) includes a camera lens.

10. The electronic mobile device of claim 1, wherein the base (102) includes a first end surface and second end surface each extending between the front surface and the rear surface, and the connection interface (130) is disposed substantially mid-way between the first end surface and the second end surface.

11. The electronic mobile device of claim 1, wherein the first cover (104) is slidable in a first direction to detach from the base, the second cover (106) is slidable in a second direction to detach from the base, and the second direction is opposite the first direction.

## Patentansprüche

1. Eine elektronische mobile Vorrichtung (100), die aufweist:
eine Basis (102) mit einer vorderen Oberfläche (108) und einer hinteren Oberfläche (620), wobei die vordere Oberfläche ein Eingabefeld (110) hat und die hintere Oberfläche eine erste Vertiefung (522) und eine zweite Vertiefung (526) definiert;
eine erste Abdeckung (104), die lösbar von der Basis (102) unterstützt wird und einen Zugriff auf die erste Vertiefung verhindert; und
eine zweite Abdeckung (106), die lösbar von der Basis (102) unterstützt wird und einen Zugriff auf die zweite Vertiefung verhindert;
wobei die Basis eine Verbindungsschnittstelle (130) umfasst, die sich entlang einer Breite der hinteren Oberfläche erstreckt und die erste Abdeckung und die zweite Abdeckung trennt.

2. Die elektronische mobile Vorrichtung gemäß Anspruch 1, wobei die erste Abdeckung (104) im Wesentlichen 50 Prozent der hinteren Oberfläche der Basis abdeckt und die zweite Abdeckung (106) im Wesentlichen 50 Prozent der hinteren Oberfläche der Basis abdeckt.

3. Die elektronische mobile Vorrichtung gemäß Anspruch 1, wobei zumindest eine der ersten Vertiefung (522) und der zweiten Vertiefung (526) eine Batterie aufgenommen hat.

4. Die elektronische mobile Vorrichtung gemäß Anspruch 1, wobei die Basis weiter eine erste Seitenfläche (316) und eine zweite Seitenfläche (318) umfasst, die sich jeweils zwischen der vorderen Oberfläche und der hinteren Oberfläche erstrecken, und wobei die erste Abdeckung (104) eine rückwärtige Platte, die einen Zugriff auf die erste Vertiefung verhindert, eine erste Seitenwand, die sich von der rückwärtigen Platte erstreckt und angrenzend an die erste Seitenfläche angeordnet ist, und eine zweite Seitenwand umfasst, die sich von der rückwärtigen Platte erstreckt und angrenzend an die zweite Seitenfläche angeordnet ist.

5. Die elektronische mobile Vorrichtung gemäß Anspruch 4, wobei die erste Abdeckung (104) im Wesentlichen 50 Prozent der ersten Seitenfläche und im Wesentlichen 50 Prozent der zweiten Seitenfläche abdeckt und die zweite Abdeckung (106) im Wesentlichen 50 Prozent der ersten Seitenfläche und im Wesentlichen 50 Prozent der zweiten Seitenfläche abdeckt.

6. Die elektronische mobile Vorrichtung gemäß Anspruch 4, wobei sich die ersten und zweiten Seitenwände über die vordere Oberfläche der Basis (102) hinaus erstrecken und enden.

7. Die elektronische mobile Vorrichtung gemäß Anspruch 4, wobei die zweite Abdeckung (106) eine rückwärtige Platte, die einen Zugriff auf die zweite Vertiefung verhindert, eine erste Seitenwand, die sich von der rückwärtigen Platte erstreckt und angrenzend an die erste Seitenfläche angeordnet ist, und eine zweite Seitenwand umfasst, die sich von der rückwärtigen Platte erstreckt und angrenzend an die zweite Seitenfläche angeordnet ist.

8. Die elektronische mobile Vorrichtung gemäß Anspruch 1, wobei die Verbindungsschnittstelle (130) zumindest einen elektrischen Kontakt umfasst.

9. Die elektronische mobile Vorrichtung gemäß Anspruch 1, wobei die Verbindungsschnittstelle (130) eine Kameralinse umfasst.

10. Die elektronische mobile Vorrichtung gemäß Anspruch 1, wobei die Basis (102) eine erste Endfläche und eine zweite Endfläche umfasst, die sich jeweils zwischen der vorderen Oberfläche und der hinteren Oberfläche erstrecken, und wobei die Verbindungsschnittstelle (130) im Wesentlichen in der Mitte zwischen der ersten Endfläche und dem zweiten Endfläche angeordnet ist.

11. Die elektronische mobile Vorrichtung gemäß Anspruch 1, wobei die erste Abdeckung (104) in eine erste Richtung verschiebbar ist, um von der Basis gelöst zu werden, die zweite Abdeckung (106) in eine zweite Richtung verschiebbar ist, um von der Basis gelöst zu werden, und die zweite Richtung entgegengesetzt zu der ersten Richtung ist.

## Revendications

1. Dispositif électronique mobile (100), comprenant :
une base (102) ayant une surface avant (108) et une surface arrière (620), la surface avant ayant un panneau d'entrée (110), et la surface arrière définissant un premier évidement (522) et un deuxième évidement (526) ;
un premier couvercle (104) supporté de manière amovible par la base (102) et empêchant l'accès au premier évidement ; et
un deuxième couvercle (106) supporté de manière amovible par la base (102) et empêchant l'accès au deuxième évidement ;
dans lequel la base comporte une interface de connexion (130) s'étendant le long d'une largeur de la surface arrière et séparant le premier couvercle et le deuxième couvercle.

2. Dispositif électronique mobile de la revendication 1, dans lequel le premier couvercle (104) couvre essentiellement 50 pour cent de la surface arrière de la base, et le deuxième couvercle (106) couvre essentiellement 50 pour cent de la surface arrière de la base.

3. Dispositif électronique mobile de la revendication 1, dans lequel au moins l'un du premier évidement (522) et du deuxième évidement (526) loge une batterie.

4. Dispositif électronique mobile de la revendication 1, dans lequel la base comporte en outre une première surface latérale (316) et une deuxième surface latérale (318) chacune s'étendant entre la surface avant et la surface arrière, et dans lequel le premier couvercle (104) comporte un panneau arrière empêchant l'accès au premier évidement, une première paroi latérale s'étendant à partir du panneau arrière et disposée de manière adjacente à la première surface latérale, et une deuxième paroi latérale s'étendant à partir du panneau arrière et disposée de manière adjacente à la deuxième surface latérale.

5. Dispositif électronique mobile de la revendication 4, dans lequel le premier couvercle (104) couvre essentiellement 50 pour cent de la première surface latérale et essentiellement 50 pour cent de la deuxième surface latérale, et le deuxième couvercle (106) couvre essentiellement 50 pour cent de la première surface latérale et essentiellement 50 pour cent de la deuxième surface latérale.

6. Dispositif électronique mobile de la revendication 4, dans lequel les première et deuxième parois latérales s'étendent et se terminent après la surface avant de la base (102).

7. Dispositif électronique mobile de la revendication 4, dans lequel le deuxième couvercle (106) comporte un panneau arrière empêchant l'accès au deuxième évidement, une première paroi latérale s'étendant à partir du panneau arrière et disposée de manière adjacente à la première surface latérale, et une deuxième paroi latérale s'étendant à partir du panneau arrière et disposée de manière adjacente à la deuxième surface latérale.

8. Dispositif électronique mobile de la revendication 1, dans lequel l'interface de connexion (130) comporte au moins un contact électrique.

9. Dispositif électronique mobile de la revendication 1, dans lequel l'interface de connexion (130) comporte un objectif.

10. Dispositif électronique mobile de la revendication 1, dans lequel la base (102) comporte une première surface d'extrémité et une deuxième surface d'extrémité chacune s'étendant entre la surface avant et la surface arrière, et l'interface de connexion (130) est disposée essentiellement à mi-chemin entre la première surface d'extrémité et la deuxième surface d'extrémité.

11. Dispositif électronique mobile de la revendication 1, dans lequel le premier couvercle (104) peut coulisser dans une première direction pour se détacher de la base, le deuxième couvercle (106) peut coulisser dans une deuxième direction pour se détacher de la base, et la deuxième direction est opposée à la première direction.
